# EUROPÄISCHE PATENTSCHRIFT

(11) **EP 4 565 468 B1**
(45) Veröffentlichungstag und Bekanntmachung des Hinweises auf die Patenterteilung: **08.04.2026**
(21) Anmeldenummer: 23744440.1
(22) Anmeldetag: 18.07.2023
(51) Int. Cl.: B60W 30/095, B60W 10/04, B60W 10/18, B60W 10/20, B60W 50/00, B60W 30/14

(54) **VERFAHREN ZUM UNTERSTÜTZEN EINES FAHRERS EINES FAHRZEUGS MITTELS MINDESTENS EINES ASSISTENZSYSTEMS UND ASSISTENZSYSTEM**
METHOD FOR ASSISTING A DRIVER OF A VEHICLE BY MEANS OF AT LEAST ONE ASSISTANCE SYSTEM AND ASSISTANCE SYSTEM
PROCÉDÉ D'AIDE D'UN CONDUCTEUR D'UN VÉHICULE AU MOYEN D'AU MOINS UN SYSTÈME D'AIDE ET SYSTÈME D'AIDE

(30) Priorität: 01.08.2022 DE 102022207905
(43) Veröffentlichungstag der Anmeldung: 11.06.2025
(73) Patentinhaber: VOLKSWAGEN AKTIENGESELLSCHAFT, 38440 Wolfsburg (DE)
(72) Erfinder: KABIL, Sevsel Gamze, 38102 Braunschweig (DE); KASTE, Jonas, 31061 Alfeld (Leine) (DE); TEMPLER, Maximilian, 38473 Tiddische (DE)
(86) Internationale Anmeldenummer: PCT/EP2023/069883
(87) Internationale Veröffentlichungsnummer: WO 2024/028098

(56) Entgegenhaltungen:
- EP-A2- 2 862 773
- DE-A1- 102013 009 279
- US-A1- 2018 037 224

## Beschreibung

Die Erfindung betrifft ein Verfahren zum Unterstützen eines Fahrers eines Fahrzeugs mittels mindestens eines Assistenzsystems und ein Assistenzsystem.

Moderne Kraftfahrzeuge zeichnen sich durch Assistenzsysteme aus, die einen Fahrer beim Fahren unterstützen können. Beispielhaft genannt seien Abstandhalteassistenten, Tempomaten und Spurhalteassistenten. Eingriffe dieser Systeme in ein Fahrverhalten des Fahrers sollten jedoch derart erfolgen, dass der Fahrer die Eingriffe akzeptiert. Anderenfalls wird das Assistenzsystem vom Fahrer deaktiviert und eine Unterstützungsfunktion bleibt ungenutzt.

Aus der DE 10 2016 222 484 A1 ist ein Verfahren zum automatisierten Steuern eines Fahrzeugs bekannt. Das Verfahren umfasst: Erfassen von Bewegungsdaten des Fahrzeugs während ein Fahrer das Fahrzeug steuert oder zumindest in ein automatisches Steuern eines Fahrzeugsteuersystems des Fahrzeugs eingreift, wobei das Fahrzeugsteuersystem dazu ausgeführt ist, das Fahrzeug basierend auf Parametern zu steuern, die das Fahrverhalten des Fahrzeugs während des automatischen Steuerns definieren; Anpassen der Parameter für das Fahrzeugsteuersystem basierend auf den Bewegungsdaten, sodass das Fahrverhalten des Fahrzeugs während des automatischen Steuerns dem Fahrverhalten des Fahrzeugs während des Steuerns durch den Fahrer entspricht; und Steuern des Fahrzeugs durch das Fahrzeugsteuersystem mit den angepassten Parametern.

Die DE 10 2013 009 279 A1 beschreibt ein Verfahren zum Betrieb eines zumindest eine erste Antriebseinheit und eine zweite Antriebseinheit umfassenden Hybridantriebsstrangs eines Fahrzeugs, wobei in Abhängigkeit eines vorausliegenden Streckenprofils eine Betriebsstrategie für den Hybridantriebsstrang ermittelt wird. Es wird mittels einer Vorausschausimulation eine Geschwindigkeitstrajektorie des Fahrzeugs für das vorausliegende Streckenprofil prognostiziert, wobei bei einer prognostizierten Überschreitung eines mittels einer automatischen Geschwindigkeitsregelanlage vorgebbaren Zielgeschwindigkeitskorridors an einer ermittelten Position auf dem Streckenprofil mittels einer als Elektromotor ausgebildeten zweiten Antriebseinheit des Hybridantriebsstrangs derart ein Bremsmoment erzeugt und eine dabei erzeugte elektrische Energie in einer Energiespeichereinheit des Hybridantriebsstrangs gespeichert wird, dass zumindest der Betrag des Überschreitens des Zielgeschwindigkeitskorridors reduziert oder das Überschreiten des Zielgeschwindigkeitskorridors vermieden wird. Weiterhin ist eine Vorrichtung zur Durchführung des Verfahrens beschrieben.

Die EP 2 862 773 A2 beschreibt ein Kraftfahrzeug, umfassend wenigstens ein Fahrerassistenzsystem zur Vorausberechnung von Voraussagedaten über wenigstens eine zukünftige Fahrsituation des Kraftfahrzeugs durch Auswertung von das Kraftfahrzeug betreffenden Egodaten und das Kraftfahrzeugumfeld betreffenden Umfelddaten, wobei das Kraftfahrzeug in einem ersten Betriebsmodus des Fahrerassistenzsystems durch einen Fahrer steuerbar ist, wobei das Fahrerassistenzsystem dazu ausgebildet ist, bei Erfüllung einer Auslösebedingung oder wenigstens einer Auslösebedingung von mehreren Auslösebedingungen temporär in einen zweiten Betriebsmodus umzuschalten, in dem die Steuerung des Kraftfahrzeugs ohne Eingriffsmöglichkeit durch den Fahrer autonom durch das Fahrerassistenzsystem erfolgt, wobei die Auslösebedingung dazu ausgebildet ist, zumindest die Voraussagedaten und wenigstens eine Fahrereigenschaft beschreibende Fahrereigenschaftsdaten auszuwerten.

Der Erfindung liegt die Aufgabe zu Grunde, ein Verfahren zum Unterstützen eines Fahrers eines Fahrzeugs mittels mindestens eines Assistenzsystems und ein Assistenzsystem, insbesondere im Hinblick auf eine Akzeptanz von Eingriffen in das Fahrverhalten des Fahrers, zu verbessern.

Die Aufgabe wird erfindungsgemäß durch ein Verfahren mit den Merkmalen des Patentanspruchs 1 und ein Assistenzsystem mit den Merkmalen des Patentanspruchs 8 gelöst. Vorteilhafte Ausgestaltungen der Erfindung ergeben sich aus den Unteransprüchen.

Insbesondere wird ein Verfahren zum Unterstützen eines Fahrers eines Fahrzeugs mittels mindestens eines Assistenzsystems zur Verfügung gestellt, wobei fahrerindividuelle Fahrparameter erhalten werden, wobei ausgehend von den fahrerindividuellen Fahrparametern ein, insbesondere mehrdimensionaler, Begrenzungsschlauch für einen vorausliegenden Streckenabschnitt bestimmt wird, wobei ausgehend von einem aktuellen Zustand, insbesondere einer aktuellen Position, des Fahrzeugs, einem bisherigen Fahrverhalten des Fahrers und den fahrerindividuellen Fahrparametern eine, insbesondere mehrdimensionale, zukünftige Trajektorie des Fahrers für den vorausliegenden Streckenabschnitt geschätzt wird, und wobei überprüft wird, ob die zukünftige Trajektorie innerhalb des bestimmten Begrenzungsschlauchs liegt, wobei ein Eingriff des Assistenzsystems in eine Längs- und/oder eine Querführung des Fahrzeugs erfolgt, wenn die geschätzte zukünftige Trajektorie den bestimmten Begrenzungsschlauch verlässt.

Ferner wird insbesondere ein Assistenzsystem zum Unterstützen eines Fahrers eines Fahrzeugs geschaffen, umfassend eine Datenverarbeitungseinrichtung, wobei die Datenverarbeitungseinrichtung dazu eingerichtet ist, fahrerindividuelle Fahrparameter zu erhalten, ausgehend von den fahrerindividuellen Fahrparametern einen, insbesondere mehrdimensionalen, Begrenzungsschlauch für einen vorausliegenden Streckenabschnitt zu bestimmen, ausgehend von einem Zustand, insbesondere einer aktuellen Position, des Fahrzeugs, einem bisherigen Fahrverhalten des Fahrers und den fahrerindividuellen Fahrparametern eine, insbesondere mehrdimensionale, zukünftige Trajektorie des Fahrers für den vorausliegenden Streckenabschnitt zu schätzen, und zu überprüfen, ob die zukünftige Trajektorie innerhalb des bestimmten Begrenzungsschlauchs liegt, und einen Eingriff in eine Längs- und/oder eine Querführung des Fahrzeugs durchzuführen oder zu veranlassen, wenn die geschätzte zukünftige Trajektorie den bestimmten Begrenzungsschlauch verlässt.

Das Verfahren und das Assistenzsystem ermöglichen es, einen Eingriff in das Fahrverhalten eines Fahrers fahrerindividuell auszugestalten. Hierdurch kann eine Akzeptanz von Eingriffen des Assistenzsystems erhöht werden. Hierzu werden fahrerindividuelle Fahrparameter erhalten. Die fahrerindividuellen Fahrparameter bilden insbesondere ein modellbasiertes oder modellfreies Fahrverhalten des individuellen Fahrers ab. Ausgehend von den erhaltenen fahrerindividuellen Fahrparametern wird ein, insbesondere mehrdimensionaler, Begrenzungsschlauch für einen vorausliegenden Streckenabschnitt bestimmt. Der Begrenzungsschlauch definiert insbesondere bezüglich mehrerer Dimensionen einen Bereich, in dem sich das Fahrzeug bewegen sollte oder bewegen darf. Ausgehend von einem aktuellen Zustand, insbesondere einer aktuellen Position, des Fahrzeugs, einem bisherigen Fahrverhalten des Fahrers (während der aktuellen Fahrt) und den fahrerindividuellen Fahrparametern wird eine, insbesondere mehrdimensionale, zukünftige Trajektorie des Fahrers für den vorausliegenden Streckenabschnitt geschätzt (prädiziert). Dies kann insbesondere mittels eines Trajektorienplaners erfolgen, dem der aktuelle Zustand, insbesondere die aktuelle Position, des Fahrzeugs, das bisherige Fahrverhalten des Fahrers während der aktuellen Fahrt und die fahrerindividuellen Fahrparameter zugeführt werden. Es wird überprüft, ob die geschätzte zukünftige Trajektorie innerhalb des bestimmten Begrenzungsschlauchs liegt. Anders ausgedrückt wird die aktuelle Fahrweise des Fahrers anhand der fahrerindividuellen Fahrparameter in die Zukunft projiziert und in Bezug auf den bestimmten Begrenzungsschlauch bewertet bzw. geprüft (dies kann auch als Prädiktionsbewertung bezeichnet werden). Der bestimmte Begrenzungsschlauch stellt insbesondere einen zulässigen Korridor um die geschätzte zukünftige (und gegebenenfalls auch eine anders bestimmte Plantrajektorie, siehe weiter unten) dar, in dem sich der Fahrer mit keinem oder einem geringen Eingriff des Assistenzsystems bewegen darf. Ein Eingriff des Assistenzsystems in eine Längs- und/oder eine Querführung des Fahrzeugs erfolgt, wenn die geschätzte zukünftige Trajektorie den bestimmten Begrenzungsschlauch verlässt. Der Eingriff erfolgt hierbei insbesondere in Abhängigkeit von einem Ausmaß der Abweichung. Insbesondere ist der Eingriff umso stärker, je größer die Abweichung ist. Hierbei können sowohl eine maximale Abweichung als auch eine über mehrere Trajektorienpunkte kumulierte Abweichung bestimmt und berücksichtigt werden. Da der Begrenzungsschlauch ausgehend von den fahrerindividuellen Fahrparametern bestimmt wird, können fahrerindividuelle Eigenschaften beim Steuern des Fahrzeugs berücksichtigt werden. Hierdurch können insbesondere sowohl die Zeitpunkte, als auch die Stärken der Eingriffe gemäß einem individuellen Fahrverhalten bestimmt und gesteuert werden. Da die Eingriffe fahrerindividuell angepasst erfolgen, kann eine Akzeptanz der Eingriffe durch den Fahrer erhöht werden.

Die fahrerindividuellen Fahrparameter bilden insbesondere ein Fahrverhalten des individuellen Fahrers ab. Hierbei wird das Fahrverhalten insbesondere modelliert und/oder modellhaft in den fahrerindividuellen Fahrparametern abgebildet. Hierbei umfassen die fahrerindividuellen Fahrparameter insbesondere Parameter bzw. ein Verhalten des Fahrers in unterschiedlichen Situationen, wie beispielsweise eine Geschwindigkeit, eine Beschleunigung und einen Lenkeinschlag für verschiedene Fahrsituationen (z.B. Kurven mit unterschiedlichen Radien). Die fahrerindividuellen Fahrparameter beschreiben hierbei insbesondere eine Verknüpfung der genannten Größen mit den unterschiedlichen Situationen. Beispielsweise kann der Fahrer ein bestimmtes Beschleunigungs-, Geschwindigkeits- und/oder Lenkprofil für eine Kurvenform aufweisen, für eine andere Kurvenform und/oder eine andere Tages-, Wochen- oder Jahreszeit hingegen ein anderes Profil. Die fahrerindividuellen Fahrparameter ermöglichen insbesondere das Schätzen eines zukünftigen Verhaltens und somit der zukünftigen Trajektorie des Fahrers. Die individuellen Fahrparameter können beispielsweise in einer Kennlinie, einem Kennfeld, einem Kennraum und/oder einer Wertewolke hinterlegt sein. Es kann auch vorgesehen sein, dass Verfahren der Künstlichen Intelligenz und des Maschinenlernens, wie beispielsweise künstliche Neuronale Netze, zum Einsatz kommen, um fahrerindividuelle Fahrparameter für eine gegebene Situation zu schätzen. Verfahren zum Sammeln, Analysieren und Abstrahieren von fahrerindividuellen Fahrparametern und/oder das Schätzen von zukünftigen Trajektorien ausgehend hiervon sind an sich bekannt.

Der Begrenzungsschlauch ist insbesondere mehrdimensional, das heißt, dieser umfasst neben der Dimension Position insbesondere auch die Dimension(en) Geschwindigkeit, Beschleunigung, Ruck und/oder Gierwinkel etc. Der Begrenzungsschlauch wird ausgehend von zumindest den fahrerindividuellen Fahrparametern und insbesondere einem Fahrbahnverlauf des vorausliegenden Streckenabschnitts bestimmt. Hierbei wird insbesondere ein in den fahrerindividuellen Fahrparametern berücksichtigtes Fahrverhalten berücksichtigt. Insbesondere können hierbei Fähigkeiten des Fahrers, wie beispielsweise technische Fertigkeiten beim Beherrschen des Fahrzeugs und verschiedener Verkehrssituationen, berücksichtigt werden. So kann es beispielsweise sein, dass ein Fahrmanöver für einen technisch versierten Fahrer innerhalb des Begrenzungsschlauchs dieses Fahrers liegt, wohingegen das gleiche Fahrmanöver bei einem technisch weniger versierten Fahrer, wie beispielsweise einem Fahranfänger, außerhalb dessen Begrenzungsschlauches liegt. Insbesondere können beim Bestimmen des Begrenzungsschlauchs weitere Größen berücksichtigt werden, wie beispielsweise physikalische Eigenschaften einer Fahrbahn des vorausliegenden Streckenabschnitts (z.B. Geometrie, Reibwert etc.), und weitere Größen, die insbesondere durch einen gewählten Fahrmodus vorgegeben werden können (z.B. Fahrgeschwindigkeit, Beschleunigungen, Rücke etc.).

Eine Trajektorie ist insbesondere eine mehrdimensionale Trajektorie, das heißt, die Trajektorie umfasst neben der Dimension Position auch die Dimension(en) Geschwindigkeit, Beschleunigung, Ruck und/oder Gierwinkel etc. Ein Zustand des Fahrzeugs umfasst insbesondere ebenfalls diese Dimensionen.

Teile des Assistenzsystems, insbesondere die Datenverarbeitungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind.

Ein Fahrzeug ist insbesondere ein Kraftfahrzeug. Das Fahrzeug weist insbesondere eine Steer-by-Wire-Lenkung auf, bei der keine mechanische Verbindung zwischen einem Lenkrad und den lenkbaren Rädern besteht und die ein Entkoppeln eines (Lenk-)Eingriffs von einer (haptischen) Rückkopplung am Lenkrad erlaubt.

In einer Ausführungsform ist vorgesehen, dass ausgehend von zumindest einem aktuellen Zustand, insbesondere einer aktuellen Position, des Fahrzeugs und den fahrerindividuellen Fahrparametern mittels eines Trajektorienplaners eine, insbesondere mehrdimensionale, Plantrajektorie für den vorausliegenden Streckenabschnitt bestimmt wird, wobei der Eingriff unter Berücksichtigung von der bestimmten Plantrajektorie erfolgt. Hierdurch kann eine Plantrajektorie unter Berücksichtigung der fahrerindividuellen Fahrparameter erzeugt werden. Die Plantrajektorie bildet hierbei ein ideales Fahrverhalten des Fahrers ab, wie es die fahrerindividuellen Fahrparameter abbilden oder beinhalten. Eine geschätzte zukünftige Trajektorie des Fahrers kann hiervon abweichen, weil diese ein bisheriges Fahrverhalten des Fahrers während der aktuellen Fahrt berücksichtigt (z.B. kann der Fahrer weniger aufmerksam als sonst sein, wodurch sich sein in den fahrerindividuellen Fahrparametern abgebildetes Verhalten ändert). Durch die Plantrajektorie wird eine für den Fahrer ideale Trajektorie für einen vorausliegenden Streckenabschnitt erzeugt, auf die das Fahrzeug bei einem notwenigen Eingriff, das heißt nach einem Überschreiten des Begrenzungsschlauches, zurückgeführt werden kann. Da die erzeugte Plantrajektorie die fahrerindividuellen Fahrparameter berücksichtigt, wird diese Plantrajektorie von dem Fahrer als ideal empfunden und der Eingriff als weniger störend. Je nach Ausprägung der fahrerindividuellen Fahrparameter (und sofern berücksichtigt, auch einem Fahrmodus und/oder einer gewählten Assistenzaufgabe) werden insbesondere aus einer Wertewolke Daten zur Optimierung von Parametern für die Trajektorienplanung extrahiert, um eine individuell passende, optimale Trajektorienplanung für die Plantrajektorie zu ermöglichen. Hierzu können beispielsweise Verfahren des Maschinenlernens, wie Decision Trees oder Inverse Reinforcement Learning eingesetzt werden. Die Trajektorienplaner haben in der Regel vorgegebene harte Randbedingungen ("hard constraints"), die nicht verletzt werden dürfen, und vorgegebene weiche Randbedingungen ("soft constraints"), die bei der Suche nach einer optimalen Lösung für die Plantrajektorie verletzt werden dürfen. Zu den harten Randbedingungen gehören z.B. eine Kraftschlussgrenze (auch als Haftgrenze bezeichnet) oder die Fahrbahnränder. Zu den weichen Randbedingungen können bestimmte Bestrafungen wie Beschleunigungen oder Rücke zählen, die ein Wunsch-Fahrverhalten direkt beeinflussen (z.B. betreffend einen Fahrkomfort). Die Trajektorienplanung soll insbesondere für eine akzeptanzoptimierte Fahrerunterstützung immer basierend auf einem aktuellen Zustand (aktuelle Position, Ego-Zustand) des Fahrzeugs eine neue optimale Lösung liefern, die abhängig vom Fahrer (Individualisierung) von der Assistenzaufgabe (z.B. Trainerfunktion etc.) und dem Fahrmodus ist (weiche Randbedingungen). Die "Lösung" für eine Plantrajektorie beschreibt insbesondere eine Prädiktion aller für die Fahrzeugführung relevanten Größen des vorausliegenden Streckenabschnitts über einen gewissen Vorausschauhorizont. Hierbei muss die Lösung immer fahrbar sein (harte Randbedingungen). Weiche Randbedingungen können jedoch temporär verletzt werden.

In einer Ausführungsform ist vorgesehen, dass eine aktuell bestimmte Plantrajektorie in einen Trajektorienpuffer übernommen wird, wenn diese den bestimmten Begrenzungsschlauch nicht verletzt, wobei der Eingriff unter Berücksichtigung von derjenigen bestimmten Plantrajektorie erfolgt, die zum Zeitpunkt des Eingriffs in dem Trajektorienpuffer hinterlegt ist. Hierdurch kann zu jedem Zeitpunkt eine Plantrajektorie zur Verfügung gestellt werden, die den Begrenzungsschlauch nicht verlässt. Eine Plantrajektorie verbleibt dann solange in dem Trajektorienpuffer, bis eine nachfolgend bestimmte Plantrajektorie gefunden wird, die den Begrenzungsschlauch ebenfalls nicht verlässt.

In einer Ausführungsform ist vorgesehen, dass beim Schätzen der zukünftigen Trajektorie und/oder beim Bestimmen der Plantrajektorie zusätzlich ein gewählter Fahrmodus und/oder eine gewählte Assistenzaufgabe berücksichtigt werden und/oder dass beim Bestimmen des Begrenzungsschlauchs zusätzlich ein gewählter Fahrmodus berücksichtigt wird. Hierdurch kann das Verfahren weiter ausdifferenziert werden und somit noch spezifischer auf die jeweilige Fahrsituation abgestimmt werden. Eine Assistenzaufgabe definiert insbesondere eine aktuelle Zielsetzung beim Betreiben des Assistenzsystems. Beispielhaft genannt seien als Assistenzaufgaben eine Unterstützung des Fahrers und ein Training. Bei einer Unterstützung wird das Assistenzsystem wie allgemein üblich zur Unterstützung des Fahrers verwendet. Bei einem Training soll der Fahrer gezielt auf ein erwünschtes Fahrverhalten trainiert werden. Beispielsweise kann vorgesehen sein, den Fahrer auf das Fahrverhalten eines Chauffeurs zu trainieren, bei dem insbesondere starke Quer- und Längsbeschleunigungen nach Möglichkeit zu vermeiden sind, um einen Fahrkomfort zu erhöhen. Ein Fahrmodus kann beispielsweise ein Ökomodus, ein Komfortmodus oder ein Sportmodus etc. sein. Hierbei werden insbesondere jeweils Eigenschaften des Fahrzeugs geändert, z.B. um Beschleunigungen zu reduzieren/zu erhöhen etc.

In einer Ausführungsform ist vorgesehen, dass um den Begrenzungsschlauch mindestens zwei aufeinander folgende Abweichungszonen definiert werden oder definiert sind, wobei ein Ausmaß des Eingriffs des Assistenzsystems in Abhängigkeit von der Abweichungszone festgelegt ist oder festgelegt wird, die von der zukünftigen Trajektorie erreicht wird. Hierdurch kann ein Eingriff in abgestuft gesteuerte Weise erfolgen. Die Abweichungszonen erlauben es insbesondere, den jeweils für eine der Zonen vorgegebenen Eingriff hinsichtlich einer Art und einer Stärke jeweils genau zu definieren. Die mindestens zwei Abweichungszonen liegen insbesondere außerhalb des Begrenzungsschlauchs. Insbesondere folgen die mindestens zwei Abweichungszonen einander in Bezug auf ein Ausmaß der Abweichung. Beispielsweise kann in der direkt an den Begrenzungsschlauch angrenzenden Abweichungszone lediglich ein Eingriff in eine Querführung vorgesehen sein, wohingegen die nachfolgende Abweichungszone bereits zusätzlich einen Eingriff auch in die Längssteuerung (insbesondere ein Abbremsen) vorsieht usw. Es kann zusätzlich vorgesehen sein, dass dem Bereich innerhalb des Begrenzungsschlauchs ebenfalls mindestens eine Abweichungszone zugewiesen wird. Dies ermöglicht eine hinsichtlich eines Unterstützungsgrades vorgebbare, und insbesondere abstufbare, Unterstützung durch das Assistenzsystem auch innerhalb des Grenzschlauches.

In einer Ausführungsform ist vorgesehen, dass, sofern die gewählte Assistenzaufgabe ein Training des Fahrers umfasst, ausgehend von vorgegebenen Idealfahrparametern eine zukünftige Idealtrajektorie bestimmt wird, wobei ein Ausmaß des Eingriffs des Assistenzsystems in Abhängigkeit von einer Abweichung zwischen der geschätzten zukünftigen Trajektorie und der bestimmten Idealtrajektorie erfolgt. Hierdurch kann der Fahrer auf ein Idealverhalten trainiert werden. Die Idealfahrparameter sind zu den fahrerindividuellen Fahrparametern gleichartig. Insbesondere können die Idealfahrparameter fahrerindividuelle Fahrparameter eines (anderen) Fahrers sein, beispielsweise eines Chauffeurs, eines besonders erfahrenen Fahrers oder auch eines Rennfahrers. Es kann auch vorgesehen sein, dass die zukünftige Idealtrajektorie als Plantrajektorie verwendet wird.

In einer Ausführungsform ist vorgesehen, dass ein Ausmaß einer mit dem Eingriff korrespondierenden Rückkopplung an den Fahrer ausgehend von einer Größe der Abweichung und/oder von der erreichten Abweichungszone festgelegt ist oder festgelegt wird. Hierdurch kann ein Eingriff derart erfolgen, dass überhaupt keine oder eine vorgegebene Rückkopplung an den Fahrer erfolgt. Dies ist insbesondere von Vorteil bzw. komforterhöhend, wenn der Eingriff nur minimal ist. Insbesondere erlaubt die Verwendung einer Steer-by-Wire-Lenkung, bei der keine mechanische Verbindung mehr zwischen einem Lenkrad und lenkbaren Rädern besteht, eine Rückkopplung vollständig von einer Lenkaktion zu entkoppeln. Auf diese Weise kann ein (Lenk-)Eingriff erfolgen, ohne dass dies für den Fahrer durch ein Rückkopplungsmoment am Lenkrad erfasst werden kann. Es kann vorgesehen sein, die Rückkopplung am Lenkrad umso größer zu gestalten, je mehr Abweichungszonen erreicht werden.

Weitere Merkmale zur Ausgestaltung des Assistenzsystems ergeben sich aus der Beschreibung von Ausgestaltungen des Verfahrens. Die Vorteile des Assistenzsystems sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Assistenzsystems zum Unterstützen eines Fahrers eines Fahrzeugs;
- Fig. 2: eine schematische Darstellung eines Verkehrsszenarios zur Verdeutlichung einer Ausführungsform des Assistenzsystems und des Verfahrens;
- Fig. 3: eine schematische Darstellung eines Verkehrsszenarios zur Verdeutlichung einer weiteren Ausführungsform des Assistenzsystems und des Verfahrens;
- Fig. 4: ein schematisches Übersichtsdiagramm zur Verdeutlichung einer Ausführungsform des Verfahrens zum Unterstützen eines Fahrers eines Fahrzeugs mittels mindestens eines Assistenzsystems.

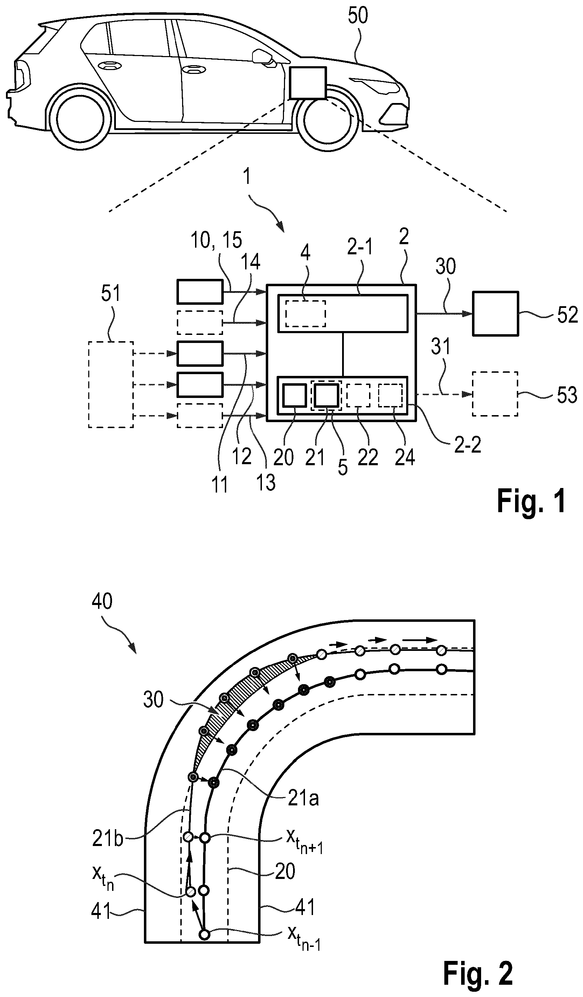

Die Fig. 1 zeigt eine schematische Darstellung einer Ausführungsform des Assistenzsystems 1 zum Unterstützen eines Fahrers eines Fahrzeugs 50.

Das Assistenzsystem 1 umfasst eine Datenverarbeitungseinrichtung 2. Die Datenverarbeitungseinrichtung 2 umfasst eine Recheneinrichtung 2-1 und einen Speicher 2-2. Die Recheneinrichtung 2-1 kann auf in dem Speicher 2-2 hinterlegte Daten zugreifen und Rechenoperationen auf den Daten ausführen. Die Recheneinrichtung 2-1 weist beispielsweise einen Mikroprozessor auf, auf dem Programmcode zum Ausführen von Verfahrensmaßnahmen des Verfahrens ausgeführt werden kann. Das in dieser Offenbarung beschriebene Verfahren wird nachfolgend anhand des Assistenzsystems 1 beschrieben.

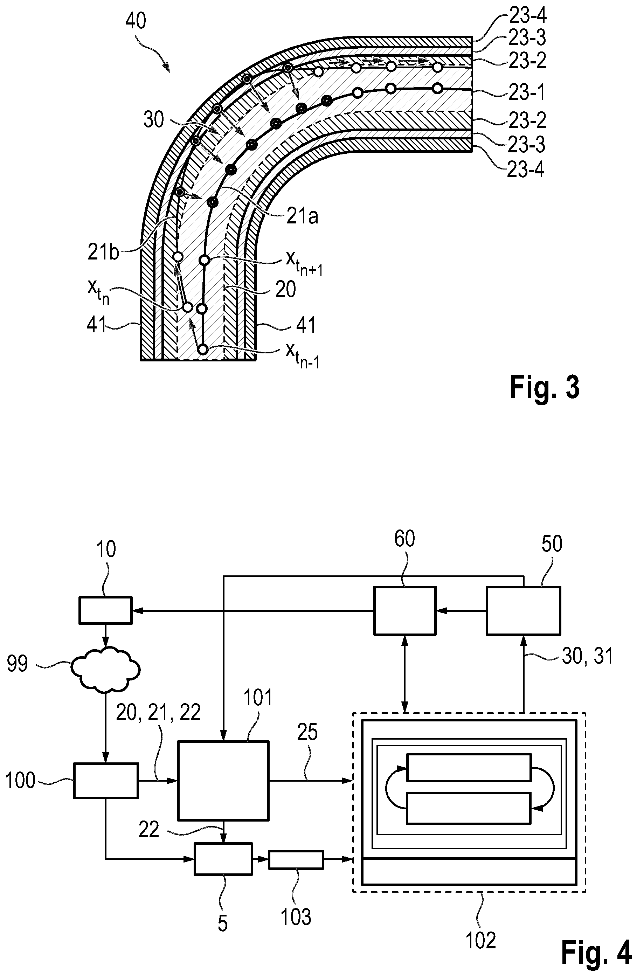

Die Datenverarbeitungseinrichtung 2 ist dazu eingerichtet, fahrerindividuelle Fahrparameter 10 zu erhalten. Ausgehend von den fahrerindividuellen Fahrparametern 10 bestimmt die Datenverarbeitungseinrichtung 2 einen, insbesondere mehrdimensionalen, Begrenzungsschlauch 20 (vgl. auch Fig. 2 und Fig. 3) für einen vorausliegenden Streckenabschnitt.

Ferner schätzt die Datenverarbeitungseinrichtung 2 ausgehend von einem aktuellen Zustand 11 des Fahrzeugs 50 (umfassend insbesondere zumindest eine aktuelle Position), welcher beispielsweise bei einer Fahrzeugsteuerung 51 abgefragt wird, einem bisherigen Fahrverhalten 12 des Fahrers bei der aktuellen Fahrt und den fahrerindividuellen Fahrparametern 10 eine, insbesondere mehrdimensionale, zukünftige Trajektorie 21 des Fahrers für den vorausliegenden Streckenabschnitt. Das Schätzen erfolgt beispielsweise mittels eines Trajektorienplaners 4.

Die Datenverarbeitungseinrichtung 2 überprüft, ob die geschätzte zukünftige Trajektorie 21 innerhalb des bestimmten Begrenzungsschlauchs 20 liegt. Ergibt das Überprüfen, dass die geschätzte zukünftige Trajektorie 21 den bestimmten Begrenzungsschlauch 20 verlässt, so veranlasst die Datenverarbeitungseinrichtung 2 einen Eingriff 30 in eine Längs- und/oder eine Querführung 52 des Fahrzeugs 50 oder führt einen solchen durch. Dies kann beispielsweise durch entsprechendes Ansteuern der Längs- und/oder Querführung 52 des Fahrzeugs 50 erfolgen. Ergibt das Überprüfen hingegen, dass die geschätzte zukünftige Trajektorie 21 den bestimmten Begrenzungsschlauch 20 nicht verlässt, das heißt innerhalb des Begrenzungsschlauches 20 liegt, so erfolgt keinerlei Eingriff 30.

Die beiden Fälle sind schematisch am Beispiel der Dimension Position in der Fig. 2 verdeutlicht. Analoge Begrenzungsschläuche für die anderen Größen, wie z.B. Beschleunigung, Geschwindigkeit, Ruck etc. werden hier der Übersichtlichkeit halber nicht dargestellt. Gezeigt ist eine schematische Darstellung eines Verkehrsszenarios 40, welches eine scharfe Rechtskurve umfasst. Gezeigt sind jeweils die geschätzten zukünftigen Trajektorien 21a, 21b für zwei unterschiedliche Fahrer bzw. für unterschiedliche bisherige Fahrverhalten eines Fahrers auf der aktuellen Fahrt. Die Trajektorien 21a, 21b umfassen hierbei für einzelne Zeitpunkte tᵢ jeweils Positionen xₜᵢ. Ausgehend von mehreren Größen, wie z.B. einer Geschwindigkeit, einer Beschleunigung und einem Lenkwinkel, ergibt sich ausgehend von einer Position xₜᵢ die jeweils nächste Position xₜᵢ₊₁. Ferner gezeigt ist ein Streckenrand 41 und der bestimmte Begrenzungsschlauch 20, der innerhalb des Streckenrandes 41 liegt. Die geschätzte Trajektorie 21a liegt hierbei innerhalb des Begrenzungsschlauchs 20, es erfolgt also verfahrensgemäß kein Eingriff. Die geschätzte zukünftige Trajektorie 21b verlässt hingegen mitten in der Kurve den Begrenzungsschlauch 20 (verdeutlicht durch die schraffierte Fläche), sodass ein Eingriff 30 erfolgt, bei dem das Fahrzeug 50 (Fig. 1) zurück in den Begrenzungsschlauch 20 geführt wird. Dies erfolgt durch einen entsprechenden Eingriff 30 in die Längs- und/oder Querführung 52 des Fahrzeugs 50, also insbesondere durch eine oder mehrere Lenkaktionen (verdeutlicht durch die Pfeile) und/oder durch Abbremsen des Fahrzeugs 50.

Es kann vorgesehen sein, dass ausgehend von zumindest einem aktuellen Zustand 11 des Fahrzeugs 50 (umfassend insbesondere eine aktuelle Position) (Fig. 1) und den fahrerindividuellen Fahrparametern 10 mittels des Trajektorienplaners 4 eine, insbesondere mehrdimensionale, Plantrajektorie 22 (Fig. 1) für den vorausliegenden Streckenabschnitt bestimmt wird, wobei der Eingriff 30 unter Berücksichtigung von der bestimmten Plantrajektorie 22 erfolgt. Insbesondere kann vorgesehen sein, dass das Fahrzeug 50 durch Ansteuern der Längs- und/oder Querführung 52 im Rahmen des Eingriffs 30 auf die Plantrajektorie 22 zurückgeführt wird, um die Abweichung zu verringern.

Weiterbildend kann vorgesehen sein, dass eine aktuell bestimmte Plantrajektorie 22 in einen Trajektorienpuffer 5 übernommen wird, wenn diese den bestimmten Begrenzungsschlauch 20 nicht verletzt, wobei der Eingriff 30 unter Berücksichtigung von derjenigen bestimmten Plantrajektorie 22 erfolgt, die zum Zeitpunkt des Eingriffs 30 in dem Trajektorienpuffer 5 hinterlegt ist. Der Trajektorienpuffer 5 wird insbesondere stets mit einer neuen bzw. aktuellen Plantrajektorie 22 befüllt, sodass für einen aktuellen Zustand 11 des Fahrzeugs 50 (umfassend insbesondere ein aktuelle Position) stets eine gültige, das heißt, eine innerhalb des Begrenzungsschlauches 20 liegende, Plantrajektorie 22 zur Verfügung steht.

Es kann weiter vorgesehen sein, dass beim Schätzen der zukünftigen Trajektorie 21 und/oder beim Bestimmen der Plantrajektorie 22 zusätzlich ein gewählter Fahrmodus 13 (Fig. 1) und/oder eine gewählte Assistenzaufgabe 14 berücksichtigt werden und/oder dass beim Bestimmen des Begrenzungsschlauchs 20 zusätzlich ein gewählter Fahrmodus 13 berücksichtigt wird. Eine Assistenzaufgabe 14 kann beispielsweise eine Unterstützung durch das Assistenzsystem 1 umfassen oder ein Training des Fahrers, um ein gewünschtes Fahrverhalten anzutrainieren (z.B. Chauffeur-Fahrverhalten, ökologisches Fahrverhalten oder Rennfahrer-Fahrverhalten auf einer Ideallinie der Strecke usw.). Die Assistenzaufgabe 14 kann insbesondere durch den Fahrer des Fahrzeugs 50 vorgegeben werden. Ein Fahrmodus 13 kann beispielsweise ein Ökomodus, ein Komfortmodus oder ein Sportmodus etc. sein, in denen das Fahrzeug 50 jeweils anders angesteuert wird, sodass das Fahrzeug andere Eigenschaften aufweist, z.B. eine begrenzte Leistungsfähigkeit, um einen Verbrauch zu senken, oder eine volle Leistungsfähigkeit, um einen Fahrspaß zu erhöhen usw. Der Fahrmodus 13 kann insbesondere durch den Fahrer gewählt werden und/oder von einer Fahrzeugsteuerung 51 abgefragt werden.

Es kann vorgesehen sein, dass um den Begrenzungsschlauch 20 mindestens zwei in Bezug auf eine Größe der Abweichung außerhalb des Begrenzungsschlauchs 20 aufeinander folgende Abweichungszonen 23-x definiert werden oder definiert sind, wobei ein Ausmaß des Eingriffs 30 des Assistenzsystems 1 in Abhängigkeit von der Abweichungszone 23-x festgelegt ist oder festgelegt wird, die von der zukünftigen Trajektorie 21 erreicht wird. Diese Ausführungsform ist schematisch in der Fig. 3 verdeutlicht. Es ist das gleiche Verkehrsszenario 40 wie in der Fig. 2 gezeigt. Gleiche Bezugszeichen bezeichnen gleiche Begriffe und Merkmale. Dargestellt sind insgesamt vier Abweichungszonen 23-x, wobei dem Bereich innerhalb des Begrenzungsschlauchs 20 ebenfalls eine Abweichungszone 23-x zugeordnet ist. Den Abweichungszonen 23-x kann jeweils eine Stufe einer Eingriffsdominanz, das heißt, ein Ausmaß der Unterstützung bzw. des Eingriffs 30, zugewiesen werden. Beispielhaft können die folgenden vier Stufen für die gezeigten vier Abweichungszonen 23-x vorgesehen sein:
1) Abweichungszone 23-1 mit einer Unterstützung erster Stufe:
   Hinsichtlich einer Ausbildung bzw. der Fertigkeiten des Fahrers, einer Assistenzaufgabe 14 und eines Fahrmodus 13 ergibt sich ein in sich konsistentes Fahrverhalten des Fahrers und wenig kritische Fahrsituationen, das heißt, die geschätzte zukünftige Trajektorie 21a befindet sich in dem Begrenzungsschlauch 20 (geringe Kritikalität bzw. Abweichung von einem Sollverhalten). Ein Eingriff 30 des Assistenzsystems 1 ist nicht notwendig. Es kann lediglich eine Unterstützung erfolgen, beispielsweise durch eine Abstandhalteassistenzfunktion.
2) Abweichungszone 23-2 mit einer Unterstützung zweiter Stufe:
   Die geschätzte zukünftige Trajektorie 21b verlässt den Begrenzungsschlauch 20 leicht und erreicht die Abweichungszone 23-2 (kleine bis mittlere Kritikalität bzw. Abweichung von einem Sollverhalten). Die zugeordnete zweite Stufe ermöglicht eine Unterstützung durch geringes Einlenken des Rades, ohne dass eine Rückkopplung am Lenkrad erfolgt (Entkopplung bei einer Steer-by-Wire-Lenkung), sodass der Fahrer den Eingriff 30 kaum oder gar nicht bemerkt. Um die gewünschte Fahrgeschwindigkeit zu erreichen, wären auch kleine Eingriffe in die Längsführung erlaubt.
3) Abweichungszone 23-3 mit einer Unterstützung dritter Stufe:
   Der Eingriff 30 auf der zugeordneten dritten Stufe umfasst eine deutliche Rückkopplung am Lenkrad (mittlere bis große Abweichung sowie Lern-/Trainingsfunktion), insbesondere durch Aufbringen eines entsprechend dimensionierten Rückkopplungsmoments (Entkopplung bei einer Steer-by-Wire-Lenkung). Die Trajektorie 21b erreicht die Abweichungszone 23-3. Auch stärkere Eingriffe in die Längsführung sind zu erwarten.
4) Abweichungszone 23-4 mit einer Unterstützung vierter Stufe:
   Der Eingriff 30 bei besonders großer Abweichung umfasst auf der vierten Stufe eine Stabilisierung des Fahrzeugs, indem eine manuelle Steuerung durch den Fahrer vollständig unterbunden wird und das Fahrzeug automatisiert (Längs- und Querführung erfolgen durch das System) in den Begrenzungsschlauch 20 zurückgeführt wird (maximale Kritikalität, das heißt, eine drohende Verletzung von harten Randbedingungen). Die Trajektorie 21b erreicht die Abweichungszone 23-4.

Die Anzahl der beschriebenen Abweichungszonen 23-x und das Ausmaß der Unterstützung auf den zugeordneten Stufen sind lediglich beispielhaft gewählt und können auch anders ausgestaltet sein.

Es kann vorgesehen sein, dass, sofern die gewählte Assistenzaufgabe 14 (Fig. 1) ein Training des Fahrers umfasst, ausgehend von vorgegebenen Idealfahrparametern 15 eine zukünftige Idealtrajektorie 24 bestimmt wird, wobei ein Ausmaß des Eingriffs 30 des Assistenzsystems 1 in Abhängigkeit von einer Abweichung zwischen der geschätzten zukünftigen Trajektorie 21 und der bestimmten Idealtrajektorie 24 erfolgt. Das Ausmaß des Eingriffs 30 kann hierbei sowohl ausgehend von einer maximalen Abweichung als auch von einer über mehrere Trajektorienpunkte kumulierten Abweichung festgelegt werden.

Es kann vorgesehen sein, dass ein Ausmaß einer mit dem Eingriff 30 korrespondierenden Rückkopplung 31 an den Fahrer ausgehend von einer Größe der Abweichung und/oder von der erreichten Abweichungszone 23-x festgelegt ist oder festgelegt wird. Die Rückkopplung 31 umfasst beispielsweise ein geeignetes Rückkoppelsignal, das dem Lenkrad 53 einer Steer-by-Wire-Lenkung des Fahrzeugs 50 zugeführt wird. In Hinblick auf die in der Fig. 3 beispielhaft gezeigten Abweichungszonen 23-x wäre die Rückkopplung 31 dann:
1) Abweichungszone 23-1: normale Rückkopplung (normales Lenkverhalten);
2) Abweichungszone 23-2: normale Rückkopplung (normales Lenkverhalten), keine zusätzliche Rückkopplung bei einem Eingriff 30;
3) Abweichungszone 23-3: starke Rückkopplung zur Verdeutlichung des (Lenk-)Eingriffs 30 (Lern-/Trainingseffekt);
4) Abweichungszone 23-4: keine oder leichte Rückkopplung, da sehr starker Eingriff zur Stabilisierung des Fahrzeugs.

Die Fig. 4 zeigt ein schematisches Übersichtsdiagramm zur Verdeutlichung einer Ausführungsform des Verfahrens zum Unterstützen eines Fahrers eines Fahrzeugs mittels mindestens eines Assistenzsystems. Das Verfahren wird insbesondere mittels eines Assistenzsystems gemäß einer der voranstehend beschriebenen Ausführungsformen ausgeführt.

Ein Fahrzeug 50, das über Steer-by-Wire gesteuert wird, wird von einem Fahrer 60 gefahren. Zum Fahrer 60 sind fahrerindividuelle Fahrparameter 10 bekannt, welche auch als Fahrerprofil oder "Fingerabdruck" des Fahrers 60 bezeichnet werden können und ein (modellbasiertes oder modellfreies) Fahrverhalten des Fahrers abbilden.

Ausgehend von den fahrerindividuellen Fahrparametern 10 wird in einer Maßnahme 100 ein, insbesondere mehrdimensionaler, Begrenzungsschlauch 20 für einen vorausliegenden Streckenabschnitt bestimmt. In derselben Maßnahme 100 wird ausgehend von einem aktuellen Zustand, insbesondere einer aktuellen Position, des Fahrzeugs 50, einem bisherigen Fahrverhalten des Fahrers 60 auf der aktuellen Strecke und den fahrerindividuellen Fahrparametern 10 eine, insbesondere mehrdimensionale, zukünftige Trajektorie 21 des Fahrers 60 für den vorausliegenden Streckenabschnitt geschätzt. Parameter für das Bestimmen des Begrenzungsschlauches 20 und das Schätzen der zukünftigen Trajektorie 21 in Maßnahme 100 werden hierbei in einer Maßnahme 99 aus einer Datenwolke oder Datenbank zusammengestellt. Hierbei werden insbesondere auch ein gewählter Fahrmodus und/oder eine vorgegebene Assistenzaufgabe berücksichtigt, welche Einfluss auf die Parameter haben.

In einer Maßnahme 101 wird die geschätzte zukünftige Trajektorie 21 anhand des bestimmten Begrenzungsschlauches 20 überprüft. Hierbei wird überprüft, ob die zukünftige Trajektorie 21 innerhalb des bestimmten Begrenzungsschlauchs 20 liegt. Ferner kann auch überprüft werden, welche von mehreren Abweichungszonen 23-x (vgl. Fig. 3) von der geschätzten zukünftigen Trajektorie 21 erreicht wird.

In einer Maßnahme 102 wird ausgehend von dem Überprüfungsergebnis 25 ein Eingriff 30 geplant. Insbesondere wird in Maßnahme 102 festgelegt, ob und wie stark ein Eingriff 30 erfolgt. Es erfolgt hierbei insbesondere ein Mischen zwischen Steuerdaten der manuellen Steuerung des Fahrers und Steuerdaten für den Eingriff. Ein Mischungsverhältnis kann insbesondere in Abhängigkeit von der Abweichungszone festgelegt werden, die erreicht wird (vgl. Fig. 3). Auch eine Rückkopplung 31 an den Fahrer 60 des Fahrzeugs 50 kann gegeben werden, wobei eine Stärke der Rückkopplung 31 insbesondere ebenfalls in Abhängigkeit von der erreichten Abweichungszone festgelegt wird.

Es ist in Maßnahme 100 ferner vorgesehen, dass ausgehend von zumindest einem aktuellen Zustand, insbesondere einer aktuellen Position, des Fahrzeugs und den fahrerindividuellen Fahrparametern 10 mittels des Trajektorienplaners eine Plantrajektorie 22 für den vorausliegenden Streckenabschnitt bestimmt wird, wobei der Eingriff 30 unter Berücksichtigung von der bestimmten Plantrajektorie 22 erfolgt.

Hierbei ist insbesondere vorgesehen, dass eine aktuell bestimmte Plantrajektorie 22 in einen Trajektorienpuffer 5 übernommen wird, wenn in Maßnahme 101 festgestellt wurde, dass diese den bestimmten Begrenzungsschlauch 20 nicht verletzt, wobei der Eingriff 30 unter Berücksichtigung von derjenigen bestimmten Plantrajektorie 22 erfolgt, die zum Zeitpunkt des Eingriffs 30 in dem Trajektorienpuffer 5 hinterlegt ist. Hierzu kann in einer Maßnahme 103 ein Vergleich zwischen einer geschätzten zukünftigen Trajektorie 21 und der im Trajektorienpuffer 5 hinterlegten Plantrajektorie 22 erfolgen.

### Bezugszeichenliste

- 1: Assistenzsystem
- 2: Datenverarbeitungseinrichtung
- 2-1: Recheneinrichtung
- 2-2: Speicher
- 4: Trajektorienplaner
- 5: Trajektorienpuffer
- 10: fahrerindividuelle Fahrparameter
- 11: aktueller Zustand (umfassend insbesondere eine aktuelle Position)
- 12: bisheriges Fahrverhalten (aktuelle Fahrt)
- 13: Fahrmodus
- 14: Assistenzaufgabe
- 15: Idealfahrparameter
- 20: Begrenzungsschlauch
- 21: geschätzte zukünftige Trajektorie
- 21a: geschätzte zukünftige Trajektorie (innerhalb Begrenzungsschlauch)
- 21b: geschätzte zukünftige Trajektorie (überschreitet Begrenzungsschlauch)
- 22: Plantrajektorie
- 23-x: Abweichungszone
- 24: Idealtrajektorie
- 30: Eingriff
- 31: Rückkopplung
- 40: Verkehrsszenario
- 41: Streckenrand
- 50: Fahrzeug
- 51: Fahrzeugsteuerung
- 52: Längs- und/oder Querführung
- 53: Lenkrad
- 60: Fahrer
- 99-102: Maßnahmen des Verfahrens
- tᵢ: Zeitpunkt
- xₜᵢ: (geschätzte) Position der Trajektorie zum Zeitpunkt tᵢ

## Patentansprüche

1. Verfahren zum Unterstützen eines Fahrers (60) eines Fahrzeugs (50) mittels mindestens eines Assistenzsystems (1),
wobei fahrerindividuelle Fahrparameter (10) erhalten werden,
wobei ausgehend von den fahrerindividuellen Fahrparametern (10) ein Begrenzungsschlauch (20) für einen vorausliegenden Streckenabschnitt bestimmt wird, wobei ausgehend von einem aktuellen Zustand (11) des Fahrzeugs (50), einem bisherigen Fahrverhalten (12) des Fahrers (60) und den fahrerindividuellen Fahrparametern (10) eine zukünftige Trajektorie (21) des Fahrers (60) für den vorausliegenden Streckenabschnitt geschätzt wird, und
wobei überprüft wird, ob die zukünftige Trajektorie (21) innerhalb des bestimmten Begrenzungsschlauchs (20) liegt,
wobei ein Eingriff des Assistenzsystems (1) in eine Längs- und/oder eine Querführung (52) des Fahrzeugs (50) erfolgt, wenn die geschätzte zukünftige Trajektorie (21) den bestimmten Begrenzungsschlauch (20) verlässt.

2. Verfahren nach Anspruch 1, **dadurch gekennzeichnet, dass** ausgehend von zumindest einem aktuellen Zustand (11) des Fahrzeugs (50) und den fahrerindividuellen Fahrparametern (10) mittels eines Trajektorienplaners (4) eine Plantrajektorie (22) für den vorausliegenden Streckenabschnitt bestimmt wird, wobei der Eingriff (30) unter Berücksichtigung von der bestimmten Plantrajektorie (22) erfolgt.

3. Verfahren nach Anspruch 2, **dadurch gekennzeichnet, dass** eine aktuell bestimmte Plantrajektorie (22) in einen Trajektorienpuffer (5) übernommen wird, wenn diese den bestimmten Begrenzungsschlauch (20) nicht verletzt, wobei der Eingriff (30) unter Berücksichtigung von derjenigen bestimmten Plantrajektorie (22) erfolgt, die zum Zeitpunkt des Eingriffs (30) in dem Trajektorienpuffer (5) hinterlegt ist.

4. Verfahren nach Anspruch 2 oder 3, **dadurch gekennzeichnet, dass** beim Schätzen der zukünftigen Trajektorie (21) und/oder beim Bestimmen der Plantrajektorie (22) zusätzlich ein gewählter Fahrmodus (13) und/oder eine gewählte Assistenzaufgabe (14) berücksichtigt werden und/oder dass beim Bestimmen des Begrenzungsschlauchs (20) zusätzlich ein gewählter Fahrmodus (13) berücksichtigt wird.

5. Verfahren nach einem der vorangegangenen Ansprüche, **dadurch gekennzeichnet, dass** um den Begrenzungsschlauch (20) mindestens zwei aufeinander folgende Abweichungszonen (23-x) definiert werden oder definiert sind, wobei ein Ausmaß des Eingriffs (30) des Assistenzsystems (1) in Abhängigkeit von der Abweichungszone (23-x) festgelegt ist oder festgelegt wird, die von der zukünftigen Trajektorie (21) erreicht wird.

6. Verfahren nach einem der Ansprüche 4 oder 5, **dadurch gekennzeichnet, dass**, sofern die gewählte Assistenzaufgabe (14) ein Training des Fahrers (60) umfasst, ausgehend von vorgegebenen Idealfahrparametern (15) eine zukünftige Idealtrajektorie (24) bestimmt wird, wobei ein Ausmaß des Eingriffs (30) des Assistenzsystems (1) in Abhängigkeit von einer Abweichung zwischen der geschätzten zukünftigen Trajektorie (21) und der bestimmten Idealtrajektorie (24) erfolgt.

7. Verfahren nach einem der vorangegangenen Ansprüche, **dadurch gekennzeichnet, dass** ein Ausmaß einer mit dem Eingriff (30) korrespondierenden Rückkopplung (31) an den Fahrer (60) ausgehend von einer Größe der Abweichung und/oder von der erreichten Abweichungszone (23-x) festgelegt ist oder festgelegt wird.

8. Assistenzsystem (1) zum Unterstützen eines Fahrers (60) eines Fahrzeugs (50), umfassend:
eine Datenverarbeitungseinrichtung (2),
wobei die Datenverarbeitungseinrichtung (2) dazu eingerichtet ist, fahrerindividuelle Fahrparameter (10) zu erhalten, ausgehend von den fahrerindividuellen Fahrparametern (10) einen Begrenzungsschlauch (20) für einen vorausliegenden Streckenabschnitt zu bestimmen,
ausgehend von einem aktuellen Zustand (11) des Fahrzeugs (50), einem bisherigen Fahrverhalten (12) des Fahrers (60) und den fahrerindividuellen Fahrparametern (10) eine zukünftige Trajektorie (20) des Fahrers (60) für den vorausliegenden Streckenabschnitt zu schätzen, und
zu überprüfen, ob die zukünftige Trajektorie (21) innerhalb des bestimmten Begrenzungsschlauchs (20) liegt, und
einen Eingriff (30) in eine Längs- und/oder eine Querführung (52) des Fahrzeugs (50) durchzuführen oder zu veranlassen, wenn die geschätzte zukünftige Trajektorie (21) den bestimmten Begrenzungsschlauch (20) verlässt.

9. Fahrzeug (50), umfassend mindestens ein Assistenzsystem (1) nach Anspruch 8.

## Claims

1. Method for assisting a driver (60) of a vehicle (50) by means of at least one assistance system (1),
wherein driver-specific driving parameters (10) are obtained,
wherein, based on the driver-specific driving parameters (10), a limiting tube (20) is determined for an upcoming portion of the route, wherein a future trajectory (21) of the driver (60) for the upcoming portion of the route is estimated based on a current state (11) of the vehicle (50), the previous driving behavior (12) of the driver (60) and the driver-specific driving parameters (10), and
wherein it is checked whether the future trajectory (21) lies within the determined limiting tube (20),
wherein an intervention by the assistance system (1) in an acceleration/deceleration and/or steering (52) of the vehicle (50) takes place when the estimated future trajectory (21) leaves the determined limiting tube (20).

2. Method according to claim 1, **characterized in that,** based on at least a current state (11) of the vehicle (50) and the driver-specific driving parameters (10), a planned trajectory (22) for the upcoming portion of the route is determined by means of a trajectory planner (4), the intervention (30) taking place in a manner that takes the determined planned trajectory (22) into account.

3. Method according to claim 2, **characterized in that** a currently determined plan trajectory (22) is incorporated into a trajectory buffer (5) if it does not violate the determined limiting tube (20), the intervention (30) being carried out in a manner that takes into account that determined plan trajectory (22) which is stored in the trajectory buffer (5) at the time of the intervention (30).

4. Method according to claim 2 or 3, **characterized in that,** when estimating the future trajectory (21) and/or when determining the planned trajectory (22), a selected driving mode (13) and/or a selected assistance task (14) is additionally taken into account, and/or when determining the limiting tube (20), a selected driving mode (13) is additionally taken into account.

5. Method according to any of the preceding claims, **characterized in that** at least two successive deviation zones (23-x) are defined around the delimiting tube (20), an extent of the intervention (30) of the assistance system (1) being determined depending on the deviation zone (23-x) reached by the future trajectory (21).

6. Method according to either claim 4 or claim 5, **characterized in that,** provided that the selected assistance task (14) comprises driver training (60), a future ideal trajectory (24) is determined based on specified ideal driving parameters (15), the extent of the intervention (30) of the assistance system (1) depending on a deviation between the estimated future trajectory (21) and the determined ideal trajectory (24).

7. Method according to any of the preceding claims, **characterized in that** an extent of feedback (31) to the driver (60), which feedback corresponds to the intervention (30), is determined based on a magnitude of the deviation and/or on the deviation zone (23-x) reached.

8. Assistance system (1) for assisting a driver (60) of a vehicle (50), comprising:
a data processing device (2),
wherein the data processing device (2) is configured to obtain driver-specific driving parameters (10), to determine a limiting tube (20) for an upcoming portion of the route based on the driver-specific driving parameters (10),
to estimate a future trajectory (20) of the driver (60) for the upcoming portion of the route based on a current state (11) of the vehicle (50), a previous driving behavior (12) of the driver (60) and the driver-specific driving parameters (10), and
to check whether the future trajectory (21) lies within the specified limiting tube (20), and
to carry out or initiate an intervention (30) in an acceleration/deceleration and/or steering (52) of the vehicle (50) if the estimated future trajectory (21) leaves the determined limiting tube (20).

9. Vehicle (50), comprising at least one assistance system (1) according to claim 8.

## Revendications

1. Procédé permettant d'assister un conducteur (60) d'un véhicule (50) au moyen d'au moins un système d'assistance (1),
dans lequel des paramètres de conduite propres au conducteur (10) sont obtenus,
dans lequel un tube de limitation (20) pour une section de route à venir est déterminé à partir des paramètres de conduite propres au conducteur (10), dans lequel une trajectoire future (21) du conducteur (60) pour la section de route à venir est estimée à partir d'un état actuel (11) du véhicule (50), d'un comportement de conduite antérieur (12) du conducteur (60) et des paramètres de conduite propres au conducteur (10), et
dans lequel on vérifie si la trajectoire future (21) se situe à l'intérieur du tube de limitation (20) déterminé,
dans lequel une intervention du système d'assistance (1) dans un guidage longitudinal et/ou un guidage transversal (52) du véhicule (50) est effectuée lorsque la trajectoire future (21) estimée quitte le tube de délimitation (20) déterminé.

2. Procédé selon la revendication 1, **caractérisé en ce qu'**une trajectoire planifiée (22) pour la section de route à venir est déterminée au moyen d'un moyen de planification de trajectoire (4) à partir d'au moins un état actuel (11) du véhicule (50) et des paramètres de conduite propres au conducteur (10), dans lequel l'intervention (30) est effectuée en tenant compte de la trajectoire planifiée (22) déterminée.

3. Procédé selon la revendication 2, **caractérisé en ce qu'**une trajectoire planifiée (22) actuellement déterminée est importée dans une mémoire tampon de trajectoires (5) si celle-ci ne quitte pas le tube de délimitation (20) déterminé, dans lequel l'intervention (30) est effectuée en tenant compte de la trajectoire planifiée (22) déterminée qui est enregistrée dans la mémoire tampon de trajectoires (5) au moment de l'intervention (30).

4. Procédé selon la revendication 2 ou 3, **caractérisé en ce que,** lors de l'estimation de la trajectoire future (21) et/ou lors de la détermination de la trajectoire planifiée (22), un mode de conduite (13) sélectionné et/ou une tâche d'assistance (14) sélectionnée sont en outre pris en compte **et/ou en ce que,** lors de la détermination du tube de limitation (20), un mode de conduite (13) sélectionné est en outre pris en compte.

5. Procédé selon l'une des revendications précédentes,
**caractérisé en ce qu'**au moins deux zones d'écart (23-x) successives sont définies autour du tube de limitation (20), dans lequel une ampleur de l'intervention (30) du système d'assistance (1) est spécifiée en fonction de la zone d'écart (23-x) atteinte par la trajectoire future (21).

6. Procédé selon l'une des revendications 4 ou 5, **caractérisé en ce que,** dans la mesure où la tâche d'assistance (14) sélectionnée comprend un entraînement du conducteur (60), une trajectoire idéale (24) future est déterminée à partir de paramètres de conduite idéale (15) prédéfinis, dans lequel une ampleur de l'intervention (30) du système d'assistance (1) est effectuée en fonction d'un écart entre la trajectoire future (21) estimée et la trajectoire idéale (24) déterminée.

7. Procédé selon l'une des revendications précédentes,
**caractérisé en ce qu'**une ampleur d'une rétroaction (31) correspondant à l'intervention (30) est spécifiée au conducteur (60) à partir d'une grandeur de l'écart et/ou de la zone d'écart (23-x) atteinte.

8. Système d'assistance (1) permettant d'assister un conducteur (60) d'un véhicule (50), comprenant :
un dispositif de traitement de données (2),
dans lequel le dispositif de traitement de données (2) est configuré pour obtenir des paramètres de conduite propres au conducteur (10), pour déterminer, à partir des paramètres de conduite propres au conducteur (10), un tube de limitation (20) pour une section de route à venir,
pour estimer une trajectoire future (20) du conducteur (60) pour la section de route à venir à partir d'un état actuel (11) du véhicule (50), d'un comportement de conduite antérieur (12) du conducteur (60) et des paramètres de conduite propres au conducteur (10), et
pour vérifier si la trajectoire future (21) se situe à l'intérieur du tube de limitation (20) déterminé, et
pour effectuer ou pour provoquer une intervention (30) dans un guidage longitudinal et/ou un guidage transversal (52) du véhicule (50) lorsque la trajectoire future (21) estimée quitte le tube de délimitation (20) déterminé.

9. Véhicule (50), comprenant au moins un système d'assistance (1) selon la revendication 8.
